# EUROPEAN PATENT APPLICATION

(11) **EP 2 892 055 A1**
(43) Date of publication of application: **08.07.2015**
(21) Application number: 13832168.2
(22) Date of filing: 01.08.2013
(51) Int. Cl.: G21K 4/00

(54) **RADIATION IMAGE CONVERSION PANEL**

(30) Priority: 29.08.2012 JP 2012188841
(71) Applicant: Hamamatsu Photonics K.K., Hamamatsu-shi, Shizuoka 435-8558 (JP)
(72) Inventor: SAKURAI Jun, Hamamatsu-shi Shizuoka 435-8558 (JP); SUZUKI Katsuhiko, Hamamatsu-shi Shizuoka 435-8558 (JP); SHIMIZU Ichinobu, Hamamatsu-shi Shizuoka 435-8558 (JP); KAMIMURA Gouji, Hamamatsu-shi Shizuoka 435-8558 (JP)
(74) Representative: Grünecker Patent- und Rechtsanwälte PartG mbB
(86) International application number: PCT/JP2013/070910
(87) International publication number: WO 2014/034372

(57) **Abstract**

A radiation image converting panel includes a support, a photostimulable phosphor layer provided on the front surface of the support and made of a plurality of columnar crystals, and a first excitation light absorbing layer provided on the photostimulable phosphor layer, each of the plurality of columnar crystals has a helical structure portion formed by stacking in a helical shape at the side close to the support and a columnar portion formed by extending from the helical structure portion toward the first excitation light absorbing layer, and the photostimulable phosphor layer accumulates incident radiation, and as a result of being irradiated with excitation light via the first excitation light absorbing layer, outputs light according to the accumulated radiation via the first excitation light absorbing layer.

## Description

### Technical Field

An aspect of the present invention relates to a radiation image converting panel.

### Background Art

In a radiation image converting panel using a photostimulable phosphor layer, it is necessary to suppress scattering and diffused reflection of excitation light in order to improve the resolution and contrast of a radiation image. Conventionally, it has been performed to suppress scattering and diffused reflection of excitation light by providing any of the layers that compose a radiation image converting panel as an excitation light absorbing layer having excitation light absorbability.

For example, Patent Document 1 discloses a phosphor panel including a support, a phosphor layer provided on the support, and a protective layer with a two-layer structure made up of a layer made of polyparaxylylene or the like and a polymer layer made of a radiation-curable covering composition added with a colorant, provided on the phosphor layer. Also, Patent Document 2 discloses a radiation image converting panel on a surface of a support of which a photostimulable phosphor layer is provided and on the other surface of the same an excitation light absorbing layer (colored resin layer) is provided. Also, Patent Document 3 discloses a radiation image converting panel formed by stacking a support, an undercoat layer, a phosphor layer, and a protective layer in order, and at least one layer of which is colored by a colorant.

Also, there has been provided an arrangement, in a radiation image converting panel using a photostimulable phosphor layer, of providing a reflection layer for photostimulated luminescence light (a white paint, a metal film, a dielectric multilayer film, or the like) between the support and photostimulable phosphor layer in order to improve luminance. For example, Patent Document 4 discloses a radiation image converting panel that is formed by stacking a support, a retroreflective layer, and a coating phosphor layer in order, and the retroreflective layer of which reflects both of excitation light and photostimulated luminescence light.

### Citation List

### Patent Literature

Patent Document 1: Japanese Patent Application Laid-Open No. 2003-75596
Patent Document 2: Japanese Patent Application Laid-Open No. 2003-248091
Patent Document 3: Japanese Published Examined Patent Application No. S59-23400
Patent Document 4: Japanese Patent Application Laid-Open No. H09-90100

### Summary of Invention

### Technical Problem

However, in the radiation image converting panel including an excitation light absorbing layer described above, because photostimulated luminescence light is absorbed by the excitation light absorbing layer although it is slight, the luminance declines. In the conventional image converting panel using a photostimulable phosphor, the structure for an improvement in resolution thus brings about a decline in luminance.

On the other hand, in the radiation image converting panel including a photostimulated luminescence light reflection layer described above, excitation light is absorbed by the photostimulated luminescence light reflection layer although it is slight, which thus serves as the cause for scattering of the excitation light. Also, in the case of a reading method that linearly reads photostimulated luminescence light, a spread of photostimulated luminescence light in the reflection layer serves as the cause for a decline in resolution. That is, because the excitation light and photostimulated luminescence light are diffused and reflected over columnar crystals by the reflection layer, the luminance improves, but the resolution declines. In the conventional image converting panel using a photostimulable phosphor, the structure for an improvement in luminance thus brings about a decline in resolution.

As above, in the conventional image converting panel using a photostimulable phosphor, because the luminance and resolution are in a trade-off relationship, it is necessary to consider the panel structure so as to balance out the luminance and resolution depending on the intended use. In addition, in the panel of a type provided with an excitation light absorbing layer that attaches importance to the resolution and contrast, it has not been sufficiently considered to improve luminance.

An aspect of the present invention has been made in view of such circumstances, and an object thereof is to provide a radiation image converting panel having a structure capable of suppressing a decline in resolution (contrast) while improving luminance (light output).

### Solution to Problem

An aspect of the present invention relates to a radiation image converting panel. The radiation image converting panel includes a support, a photostimulable phosphor layer provided on the front surface of the support and made of a plurality of columnar crystals, and a first excitation light absorbing layer provided on the photostimulable phosphor layer. Each of the plurality of columnar crystals has a helical structure portion formed by stacking in a helical shape at the side close to the support and a columnar portion formed by extending from the helical structure portion toward the first excitation light absorbing layer, and the photostimulable phosphor layer accumulates incident radiation, and as a result of being irradiated with excitation light via the first excitation light absorbing layer, outputs light according to the accumulated radiation via the first excitation light absorbing layer.

In this radiation image converting panel, the photostimulable phosphor layer having a columnar crystal structure is provided on the support, and each of the plurality of columnar crystals has the helical structure portion formed by stacking in a helical shape at the side close to the support, and the columnar portion formed by extending from the helical structure portion toward the first excitation light absorbing layer. This helical structure portion functions as a photostimulated luminescence light reflection layer, and therefore can reflect light that travels to the side close to the support of the light of photostimulated luminescence produced in each one columnar crystal to output the light via the first excitation light absorbing layer, which makes it possible to improve the light output (luminance). Also, because the helical structure portion is formed by the columnar crystal being stacked in a helical shape at the side close to the support and is continuous from the columnar portion, the photostimulated luminescence light reflected by the helical structure portion is guided along the columnar portion. That is, light that travels to the side close to the support of the light of photostimulated luminescence produced in each one columnar crystal is reflected by the helical structure portion of that columnar crystal, and the reflected light is guided along the columnar portion of the columnar crystal. Therefore, diffusion of the photostimulated luminescence light in the columnar crystal to another columnar crystal due to reflection can be prevented, so that a decline in resolution due to reflection can be suppressed. Also, the helical structure portion also reflects the excitation light, but similar to the photostimulated luminescence light, the excitation light is reflected within the columnar crystal on which the excitation light has been made incident, and therefore does not excite a latent image in the columnar crystals other than the columnar crystal on which the excitation light has been made incident, so that a decline in resolution can be suppressed. As a result, it becomes possible to suppress a decline in resolution while improving luminance.

The radiation image converting panel may further include a second excitation light absorbing layer facing the first excitation light absorbing layer with the photostimulable phosphor layer interposed therebetween. Also, the second excitation light absorbing layer may be provided between the support and the photostimulable phosphor layer. Also, the second excitation light absorbing layer may be provided on the back surface of the support that is on the side opposite to the front surface of the support. The excitation light transmitted through the photostimulable phosphor layer without being reflected in the helical structure portion can thereby be absorbed by the second excitation light absorbing layer, so that scattering and diffused reflection of the excitation light at the side close to the support can be suppressed. As a result, it becomes possible to further suppress a decline in resolution.

The second excitation light absorbing layer may absorb light of photostimulated luminescence produced in the photostimulable phosphor layer. The photostimulated luminescence light that could not be reflected in the helical structure portion can thereby be absorbed at the side close to the support, so that scattering of the photostimulated luminescence light can be suppressed. As a result, it becomes possible to further suppress a decline in resolution.

The support may have excitation light absorbability. The excitation light transmitted through the photostimulable phosphor layer without being reflected in the helical structure portion can thereby be absorbed by the support, so that scattering and diffused reflection of the excitation light at the side close to the support can be suppressed. As a result, it becomes possible to further suppress a decline in resolution.

The support may absorb light of photostimulated luminescence produced in the photostimulable phosphor layer. The photostimulated luminescence light that could not be reflected in the helical structure portion can thereby be absorbed by the support, so that scattering of the photostimulated luminescence light can be suppressed. As a result, it becomes possible to further suppress a decline in resolution.

The first excitation light absorbing layer may be a moisture-resistant protective film that protects the photostimulable phosphor layer. The photostimulable phosphor layer can thereby be suppressed from absorbing moisture in the air, so that the photostimulable phosphor layer can be suppressed from deliquescing.

The photostimulable phosphor layer may be composed of a photostimulable phosphor including Eu-doped CsBr. The performance of accumulating radiation and the performance of converting accumulated radiation into light can thereby be improved.

The first excitation light absorbing layer may be provided so as to cover the front surface and side surface of the photostimulable phosphor layer. By the first excitation light absorbing layer covering the front surface and side surface of the photostimulable phosphor layer, the excitation light can be absorbed at the front surface and side surface of the photostimulable phosphor layer, so that scattering and diffused reflection of the excitation light at the front surface and side surface of the photostimulable phosphor layer can be suppressed. As a result, it becomes possible to further suppress a decline in resolution.

Also, the first excitation light absorbing layer may be provided so as to cover the side surface of the support. By the first excitation light absorbing layer covering the side surface of the support, the excitation light can be absorbed at the side surface of the support, so that scattering and diffused reflection of the excitation light at the side surface of the support can be suppressed. As a result, it becomes possible to further suppress a decline in resolution.

### Advantageous Effects of Invention

According to an aspect of the present invention, a decline in resolution can be suppressed, while the luminance can be improved.

### Brief Description of Drawings

Fig. 1 is a schematic side sectional view showing a configuration of a radiation image converting panel according to a first embodiment.
Fig. 2 is a schematic side sectional view showing the radiation image converting panel of Fig. 1 in an enlarged manner.
Fig. 3 is a schematic sectional view in a direction perpendicular to the support of a columnar crystal that is a component of the photostimulable phosphor layer of Fig. 1.
Figs. 4 are schematic sectional views in a direction perpendicular to the support of helical structure portions of the columnar crystals of Fig. 3.
Fig. 5 is a chart showing the relationship of light output and resolution of radiation image converting panels.
Fig. 6 is a schematic side sectional view showing a configuration of a radiation image converting panel according to a second embodiment.
Fig. 7 is a schematic side sectional view showing a configuration of a radiation image converting panel according to a third embodiment.
Fig. 8 is a schematic side sectional view showing a configuration of a radiation image converting panel according to a fourth embodiment.
Fig. 9 is a schematic side sectional view showing a configuration of a radiation image converting panel according to a fifth embodiment.

### Description of Embodiments

Hereinafter, embodiments of a radiation image converting panel according to an aspect of the present invention will be described in detail with reference to the drawings. Also, the same or corresponding parts will be denoted by the same reference signs in the description of the drawings, and overlapping description will be omitted.

### [First Embodiment]

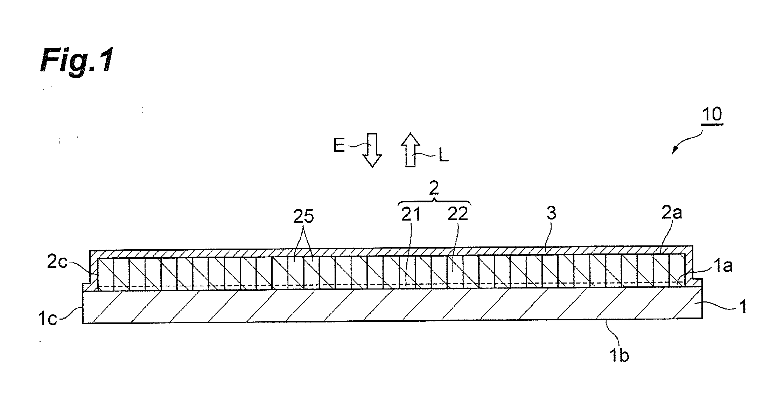

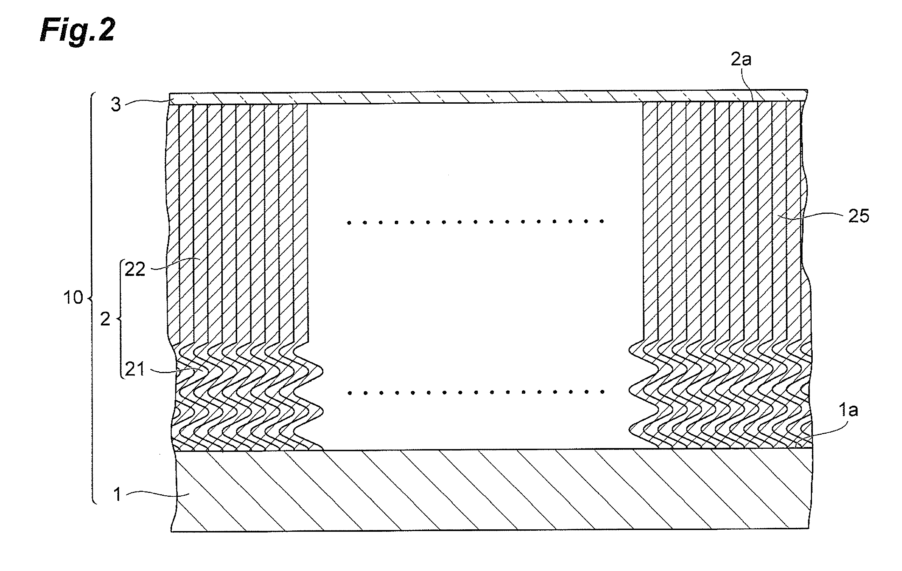

Fig. 1 is a schematic side sectional view showing a configuration of a radiation image converting panel according to a first embodiment. Fig. 2 is a schematic side sectional view showing the radiation image converting panel of Fig. 1 in an enlarged manner. As shown in Fig. 1 and Fig. 2, the radiation image converting panel 10 is a panel for converting incident radiation R such as X-rays into a light L for detection, and shows, for example, a rectangular plate shape. The length of the radiation image converting panel 10 is on the order of 100mm, the width thereof is on the order of 100mm, and the thickness thereof is on the order of 0.4mm.

The radiation image converting panel 10 is used as, for example, a dental imaging plate (Needle Imaging Plate; NIP). Also, the radiation image converting panel 10 is, by combination with a HeNe laser and PMT (Photomultiplier Tube) (not shown) or the like, used as a radiation image sensor. The radiation image converting panel 10 includes a support 1, a photostimulable phosphor layer 2, and a first excitation light absorbing layer 3.

The support 1 is a base material showing a rectangular shape. The support 1 is composed of, for example, polyimide, PET (polyethylene terephthalate), PEEK (polyether ether ketone), a metal such as Al (aluminum), PEN (polyethylene naphthalate), LCP (liquid crystal polymer), PA (polyamide), PES (polyether sulfone), PPS (polyphenylene sulfide), PBT (polybutylene terephthalate), glass, a stainless steel foil, CFRP (Carbon Fiber Reinforced Plastic), or amorphous carbon. The thickness of the support 1 is, for example, 10µm or more, and is, for example, 500µm or less. For the support 1, it is preferable to select a resin film if a constant flexibility is necessary.

The photostimulable phosphor layer 2 is a layer that absorbs and accumulates incident radiation R, and releases a photostimulated luminescence light L according to energy of the accumulated radiation R as a result of being irradiated with an excitation light E. The photostimulable phosphor layer 2 is provided on a front surface 1a of the support 1, and its thickness is, for example, 80µm or more, and is, for example, 600µm or less.

This photostimulable phosphor layer 2 is composed of, for example, a photostimulable phosphor including CsBr (cesium bromide) doped with Eu (europium) (hereinafter, referred to as "CsBr:Eu"), and is structured such that a plurality of columnar crystals 25 stand in a forest-like manner (referred to also as needle-like crystals). In addition, the CsBr:Eu has high performance in accumulating radiation and in converting accumulated radiation into light, but is highly hygroscopic, and absorbs moisture in the air to deliquesce in an exposed state. Also, the wavelength range of the excitation light E that is irradiated onto the photostimulable phosphor layer 2 is on the order of 550nm to 800nm, and the wavelength range of the photostimulated luminescence light L that is released by the photostimulable phosphor layer 2 is on the order of 350nm to 500nm.

The photostimulable phosphor layer 2 has a reflection layer 21 and a columnar layer 22 that are composed of the plurality of columnar crystals 25. The thickness of the photostimulable phosphor layer 2 is, for example, on the order of 50µm to 1000µm, and the reflection layer 21 has a thickness on the order of approximately 5µm to the order of approximately 50µm, which is a thickness that occupies on the order of approximately 1% to 10% of the thickness of the photostimulable phosphor layer 2.

The columnar crystals 25 are obtained by making photostimulable phosphor (CsBr:Eu) crystals grow, and their base parts at the side close to the support 1 serve as helical structure portions 23, and their parts at the side (side close to the upper surface 2a) higher than the helical structure portions 23 serve as columnar portions 24. In each columnar crystal 25, the helical structure portion 23 and the columnar portion 24 are integrally formed by continuous stacking of photostimulable phosphor crystals. In addition, the columnar crystals 25 are formed in tapered shapes in which the outer diameter of the columnar portions 24 is smaller than the outer diameter of the helical structure portions 23 and which become thicker toward the distal end side (opposite side to the support 1). Moreover, because their most distal end portions are in pointed shapes, the columnar portions 24 excluding the pointed parts are formed in tapered shapes.

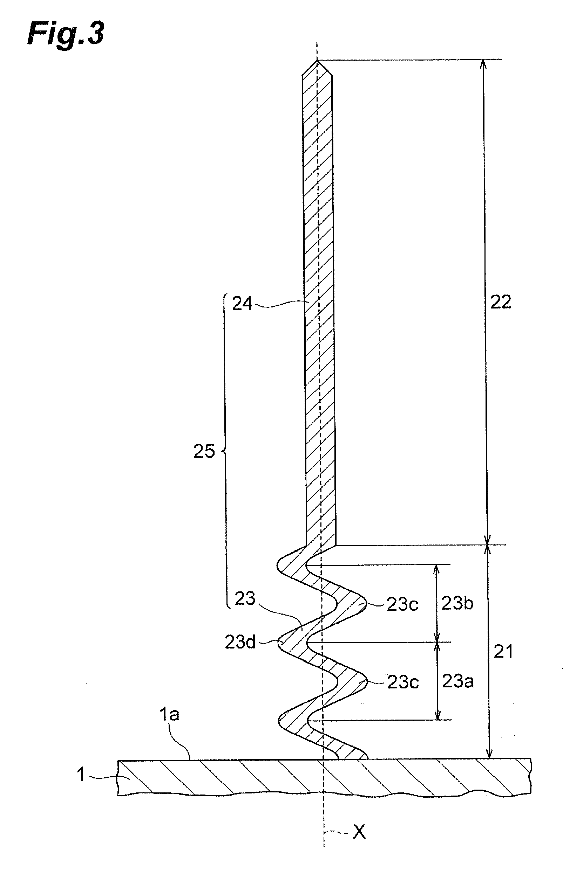

The helical structure portion 23 is composed of photostimulable phosphor crystals stacked into a helical shape from the front surface 1a of the support 1, and has a helical structure for which the parts (helical loops) each corresponding to one circle around a center axis X are almost regularly formed in a direction perpendicular to the front surface 1a. In Fig. 3, the range shown by reference sign 23a, 23b constitutes each one of the helical loops. The dimension of the helical loop (hereinafter, referred to also as the "helix pitch") in the direction perpendicular to the front surface 2a is on the order of approximately 0.5µm to approximately 15µm, and substantially the same helical loops are stacked up in plural numbers (for example, on the order of 5 to approximately 15 loops) to constitute the helical structure portion 23.

Also, the helical structure portion 23, in a section in the direction (normal axis direction) perpendicular to the front surface 1a of the support 1 as shown in Fig. 3, has a bending structure in which photostimulable phosphor crystals are almost regularly bent repeatedly to the right and left across the center axis X and which is obtained by connecting a plurality of V-shaped parts 23a and 23b with each other. The part projecting farthest to the right side in Fig. 3 of each V-shaped part 23a, 23b serves as a folding portion 23c, and the part where the V-shaped parts 23a and 23b connect with each other serves as a connecting portion 23d.

The columnar portion 24 is formed as a straight portion continuously from the helical structure portion 23, and has a columnar structure formed of photostimulable phosphor crystals extending substantially straight along a direction to intersect the front surface 1a. Moreover, the helical structure portion 23 and the columnar portion 24 are integrally formed continuously by vapor deposition.

In addition, when the columnar crystals 25, on which radiation information according to incident radiation R is accumulatively recorded, is irradiated with a red laser light or the like as an excitation light E, light according to the accumulated information is guided through the columnar portions 24, and is released from the distal end side (opposite side to the support 1). The reflection layer 21 reflects light that is guided to the side close to the reflection layer 21 of the light that is guided through the columnar crystal 25 to increase the amount of light that is released from the distal end side.

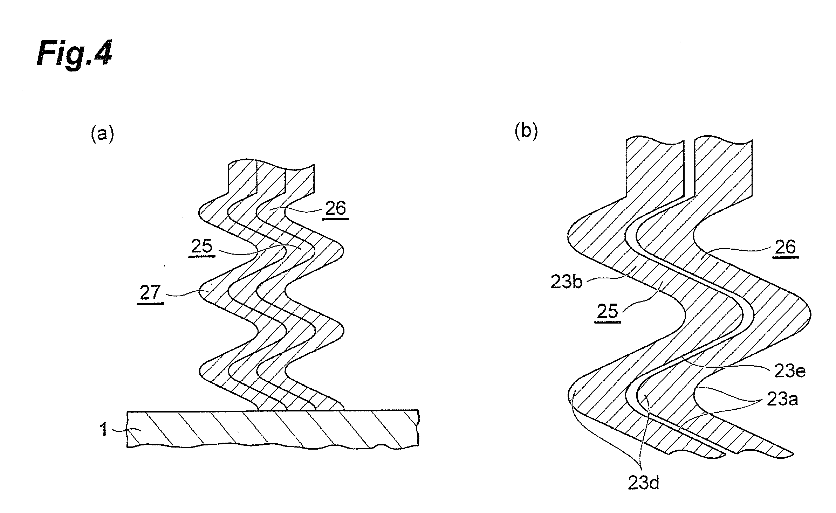

Moreover, the columnar crystal 25, as shown in Fig. 4(a), in terms of the relationship with its neighboring columnar crystals 26 and 27, has a caught-in structure in which one is caught in between vertically separated parts of the other. That is, as shown in Fig. 4(b) by enlarging Fig. 4(a), the columnar crystal 25 has a caught-in structure in terms of the columnar crystal 26, 27 adjacent to each other in which the connecting portion 23d of the columnar crystal 26 is caught in a gap 23e that is formed between the V-shaped parts 23a and 23b at the right side of the connecting portion 23d of the columnar crystal 25.

Because of this caught-in structure, a part at the side close to the columnar crystal 26 in the helical structure portion 23 of the columnar crystal 25 and a part at the side close to the columnar crystal 25 in the helical structure portion 23 of the columnar crystal 26 overlap with each other when viewed from a direction vertical to the front surface 1 a of the support 1. More specifically, the folding portion 23 c of the columnar crystal 25 and the connecting portion 23d of the columnar crystal 26 overlap with each other when viewed from upside. Moreover, the gap between the helical structure portion 23 of the columnar crystal 25 and the helical structure portion 23 of the columnar crystal 26 is in a wavy line shape when viewed from a direction parallel to the front surface 1a of the support 1 (the side of the side surface 1c of the support 1).

Of the columnar crystals 25 having such structures as above, the helical structure portions 23 compose the reflection layer 21, and the columnar portions 24 compose the columnar layer 22. The reflection layer 21, when a light L emitted in each columnar crystal 25 is made incident thereon, reflects the incident light L in that columnar crystal 25. Also, the columnar layer 22 guides a light L emitted in the columnar crystal 25 and a light L reflected by the reflection layer 21.

The first excitation light absorbing layer 3 is a layer for absorbing the excitation light E at a predetermined absorbance to prevent diffusion and reflection of the excitation light E in the photostimulable phosphor layer 2. The first excitation light absorbing layer 3 is provided so as to cover an upper surface 2a and side surfaces 2c of the photostimulable phosphor layer 2 and fill gaps of the plurality of columnar crystals 25 of the photostimulable phosphor layer 2. The thickness of the first excitation light absorbing layer 3 is, for example, 2µm or more, and is, for example, 20µm or less.

This first excitation light absorbing layer 3 is composed of, for example, a urethane-acrylic-based resin, and contains a dye that selectively absorbs the excitation light E. The first excitation light absorbing layer 3 contains such a dye that, for example, the absorbance with respect to the wavelength range of the excitation light E becomes higher than the absorbance with respect to the wavelength range of the photostimulated luminescence light L. The absorbance with respect to the wavelength range of the excitation light E of the first excitation light absorbing layer 3 is, for example, on the order of 20% to 99.9%, and the absorbance with respect to the wavelength range of the photostimulated luminescence light L of the first excitation light absorbing layer 3 is, for example, on the order of 0.1% to 40%. Examples of such a dye that can be used include Zapon Fast Blue 3G (manufactured by Hoechst), Estrol Brill Blue N-3RL (manufactured by Sumitomo Chemical), D&C Blue No. 1 (manufactured by National Aniline), Spirit Blue (manufactured by Hodogaya Chemical), Oil Blue No. 603 (manufactured by Orient Chemical), Kiton Blue A (manufactured by Ciba-Geigy), Aizen Cathilon Blue GLH (manufactured by Hodogaya Chemical), Lake Blue AFH (manufactured by Kyowa Sangyo), Primocyanine 6GX (manufactured by Inabata & Co., Ltd.), Brillacid Green 6BH (manufactured by Hodogaya Chemical), Cyan Blue BNRCS (manufactured by TOYO INK), and Lionol Blue SL (manufactured by TOYO INK). Examples of the dye also include organic metal complex coloring materials such as Color Index No. 24411, No. 23160, No. 74180, No. 74200, No. 22800, No. 23154, No. 23155, No. 24401, No. 14830, No. 15050, No. 15760, No. 15707, No. 17941, No. 74220, No. 13425, No. 13361, No. 13420, No. 11836, No. 74140, No. 74380, No. 74350, and No. 74460. Examples of inorganic coloring materials include ultramarine, cobalt blue, cerulean blue, chromium oxide, and TiO₂-ZnO-Co-NiO-type pigments, and the first excitation light absorbing layer 3 is colored, for example, in blue. Moreover, the first excitation light absorbing layer 3 made of such a resin and dye can be formed by coating and drying of a molten resin, bonding via an adhesive layer of a resin film, transfer by screen printing, or the like.

In the radiation image converting panel 10 configured as above, when radiation R (a radiation image) is made incident via the first excitation light absorbing layer 3, the incident radiation R is absorbed and accumulated by the photostimulable phosphor layer 2. When a red laser light or the like is thereafter irradiated as an excitation light E onto the photostimulable phosphor layer 2 via the first excitation light absorbing layer 3, a photostimulated luminescence light L according to energy of the radiation R accumulated by the photostimulable phosphor layer 2 is guided to the columnar crystals 25, and is released from the distal ends. Then, the photostimulated luminescence light L released from the photostimulable phosphor layer 2 is transmitted through the first excitation light absorbing layer 3 to be output.

Here, an example of a method for manufacturing a radiation image converting panel 10 will be described. First, on the front surface 1a of a support 1, columnar crystals 25 of CsBr:Eu are grown by a vapor-phase deposition method such as a vacuum vapor deposition method to form a photostimulable phosphor layer 2. As specific description, the photostimulable phosphor layer 2 is formed using a manufacturing apparatus (not shown) including in a coaxial manner a disk for placement in the center of which the support 1 is placed and a deposition vessel having an annular storage portion in which an evaporation source is stored. The storage portion is closed at its plane of the side close to the disk, but is formed at a part thereof with a hole portion, and is structured to be opened and closed by a shutter.

Crystal growth is performed by coaxially rotating the disk and deposition vessel, evaporating the evaporation source stored in the storage portion, and opening the shutter to deposit the evaporated evaporation source on the front surface 1a of the support 1. At that time, the rotation speed of the deposition vessel is made slower than the rotation speed of the disk by setting therebetween a difference in the number of rotations per unit time.

In the manufacturing apparatus, when the difference of the number of rotations per unit time of the disk (i.e., the number of rotations per unit time of the support 1) and the number of rotations per unit time (i.e., the number of rotations per unit time of the hole portion) is provided as a difference in the number of rotations, if the difference in the number of rotations is made smaller than a certain value, the foregoing helical structure portions 23 appear in the columnar crystals 25 of the photostimulable phosphor layer 2. Therefore, for a certain amount of time from the start of manufacturing, crystal growth is performed with a difference in the number of rotations made smaller than the certain value to thereby form the foregoing helical structure portions 23. Thereafter, columnar portions 24 are performed with a greater difference in the number of rotations to thereby form a photostimulable phosphor layer 2.

Next, a first excitation light absorbing layer 3 is formed by coating and drying with a thickness on the order of 10µm so as to cover the upper surface 2a and side surfaces 2c of the photostimulable phosphor layer 2. In the manner as above, a radiation image converting panel 10 is fabricated.

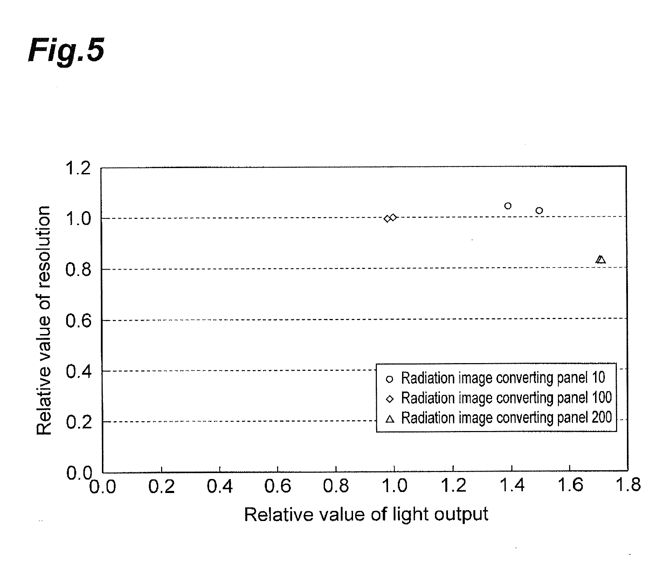

Fig. 5 is a chart showing the relationship of light output and resolution of respective radiation image converting panels. The radiation image converting panel 100 of a first comparative example is different from the radiation image converting panel 10 in the point that the photostimulable phosphor layer does not have helical structure portions and in the point of having a transparent protective film (clear coat) in place of the first excitation light absorbing layer 3. The radiation image converting panel 200 of a second comparative example is different from the radiation image converting panel 10 in the point of having a transparent protective film (clear coat) in place of the first excitation light absorbing layer 3. The radiation image converting panel 10, the radiation image converting panel 100, and the radiation image converting panel 200 were used and measured two times each for the light output and resolution. In Fig. 5, the resolution and light output of the first measurement result are set as 1 to standardize the resolutions and light outputs of other measurement results.

As shown in Fig. 5, the light outputs of the radiation image converting panel 200 have improved on the order of 1.7 times as compared with the light outputs of the radiation image converting panel 100, but the resolutions of the radiation image converting panel 200 have declined on the order of 0.8 times as compared with the resolutions of the radiation image converting panel 100. On the other hand, the light outputs of the radiation image converting panel 10 have improved on the order of 1.4 times to 1.5 times as compared with the light outputs of the radiation image converting panel 100, and the resolutions of the radiation image converting panel 10 have slightly improved as compared with the resolutions of the radiation image converting panel 100.

It can be understood from these results that the radiation image converting panel 10, by including the first excitation light absorbing layer 3 and the helical structure portions 23, has been suppressed from a decline in resolution while having been improved in light output as compared with the radiation image converting panel 100.

As described above, the radiation image converting panel 10 includes the photostimulable phosphor layer 2 made of the plurality of columnar crystals 25 on the support 1. Each of the plurality of columnar crystals 25 has the helical structure portion 23 formed by stacking in a helical shape at the side close to the support 1, and the columnar portion 24 formed by extending from the helical structure portion 23 toward the first excitation light absorbing layer 3. This helical structure portion 23 functions as a reflection layer for a photostimulated luminescence light L, and therefore can reflect light that travels to the side close to the support 1 of the light L of photostimulated luminescence produced in each one columnar crystal 25 to output the light via the first excitation light absorbing layer 3, which makes it possible to improve the light output (luminance). Also, because the helical structure portion 23 is formed by the columnar crystal 25 being stacked in a helical shape at the side close to the support 1 and is continuous from the columnar portion 24, light that travels to the side close to the support 1 of the light L of photostimulated luminescence produced in each one columnar crystal 25 is reflected by the helical structure portion 23 of that columnar crystal 25, and the reflected light is guided along the columnar portion 24 of the columnar crystal 25. Therefore, diffusion of the photostimulated luminescence light L in the columnar crystal 25 to another columnar crystal 25 due to reflection can be prevented, so that a decline in resolution due to reflection can be suppressed. Also, the helical structure portion 23 also reflects the excitation light E, but similar to the photostimulated luminescence light L, the excitation light E is reflected within the columnar crystal 25 on which the excitation light E has been made incident, and therefore does not excite a latent image in the columnar crystals 25 other than the columnar crystal 25 on which the excitation light E has been made incident, so that a decline in resolution can be suppressed. As a result, it becomes possible to suppress a decline in resolution while improving luminance.

Also, the radiation image converting panel 10 includes the first excitation light absorbing layer provided on the photostimulable phosphor layer 2, and the photostimulable phosphor layer 2 accumulates incident radiation R, and as a result of being irradiated with an excitation light E via the first excitation light absorbing layer 3, outputs a light L according to the accumulated radiation R via the first excitation light absorbing layer 3. Scattering and diffused reflection of the excitation light E on the surface of incidence can thereby be reduced, so that the resolution and contrast can be improved.

Also, the radiation image converting panel 10 can exhibit satisfactory light reflecting characteristics even without having a light reflection film such as a metal film for enhancing reflectivity and increase the amount of light emission from the upper surface 2a, and can therefore be enhanced in the sensitivity of detecting radiation R. Moreover, the radiation image converting panel 10 is not formed with a metal film to enhance the sensitivity of detecting radiation R, and is therefore free from the potential for corrosion caused by a metal film.

Furthermore, in the radiation image converting panel 10, the reflection layer 21 is composed of the helical structure portions 23 of the columnar crystals 25. As in the foregoing, because the columnar crystals 25 form a caught-in structure in which ones adjacent in the helical structure portions 23 are caught in one another, in the helical structure portions 23, the space in which no photostimulable phosphor crystals exist can be made extremely small. Therefore, because the density of photostimulable phosphor crystals in the reflection layer 21 is high, a high reflectivity is exhibited.

Moreover, as described above, applying the caught-in structure with which a slight gap is formed to the helical structure portions 23 can prevent light reflected by the helical structure portion 23 from being guided to the adjacent columnar crystal 25 to result in a decline in contrast when the helical structure portions 23 contact. Further, the helical structure portions 23 can also be increased in packing density within the panel surface to improve the reflectivity. In addition, for a higher contrast, it is desirable that all columnar crystals 25 including the helical structure portions 23 in the panel surface are separated into individual columnar crystals 25. Because the columnar crystals 25 are formed by vapor deposition, it is difficult to completely separate all columnar crystals 25, but forming the columnar crystals 25 so as to be roughly separated allows obtaining a satisfactory radiation image converting panel 10.

Meanwhile, the photostimulable phosphor layer 2 has a high absorbance of the excitation light E, but the excitation light E passes inside of the columnar crystal 25 and the gap of the columnar crystals 25, and a part of the excitation light E is transmitted through the photostimulable phosphor layer 2. Then, the excitation light E transmitted through the photostimulable phosphor layer 2 is sometimes further transmitted through the support 1. Scattering and diffused reflection of the excitation light E transmitted through the photostimulable phosphor layer 2 and the excitation light E transmitted through the support 1 may excite another columnar crystal 25 of the photostimulable phosphor layer 2 to cause a decline in resolution. Therefore, in the second to fifth embodiments, radiation image converting panels having a structure capable of further suppressing a decline in resolution are provided.

### [Second Embodiment]

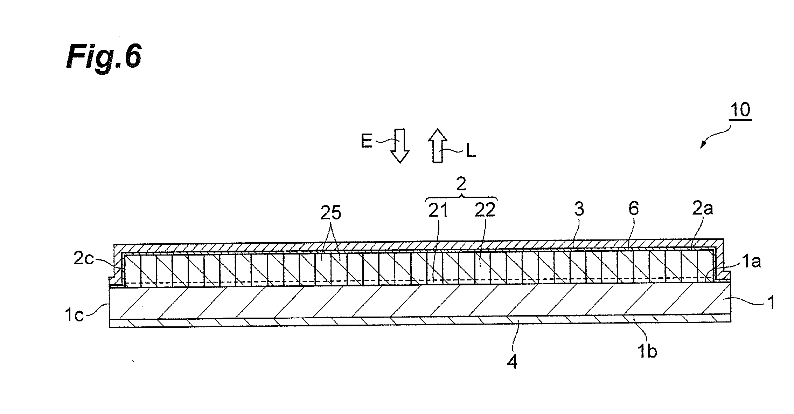

Fig. 6 is a schematic side sectional view showing a configuration of a radiation image converting panel according to a second embodiment. As shown in Fig. 6, the radiation image converting panel 10 of the second embodiment is different from the radiation image converting panel 10 of the first embodiment described above in the point of further including a second excitation light absorbing layer 4 that faces the first excitation light absorbing layer 3 with the photostimulable phosphor layer 2 interposed therebetween and in the point of providing (bonding to the photostimulable phosphor layer 2) a first excitation light absorbing layer 3 made of a colored resin film via an adhesive layer 6.

The adhesive layer 6 is provided on the front surface 1a of the support 1 and the upper surface 2a and the side surfaces 2c of the photostimulable phosphor layer 2. The adhesive layer 6 is composed of, for example, PE (polyethylene), an acrylic-based resin, or an epoxy-based resin. The thickness of the adhesive layer 6 is, for example, 2µm or more, and is, for example, 30µm or less. The first excitation light absorbing layer 3 is provided so as to cover the whole of the upper surface 2a and the side surfaces 2c of the photostimulable phosphor layer 2 via the adhesive layer 6.

The second excitation light absorbing layer 4 is a layer that can absorb the excitation light E at a predetermined absorbance equivalent to the first excitation light absorbing layer 3 to prevent diffusion and reflection of the excitation light E. The second excitation light absorbing layer 4 is provided on the back surface 1b of the support 1 so as to cover the whole of the back surface 1b. The thickness of the second excitation light absorbing layer 4 is, for example, 2µm or more, and is, for example, 50µm or less. The second excitation light absorbing layer 4 is colored, for example, in blue. This second excitation light absorbing layer 4 can be formed by coating and drying of a molten resin, bonding via an adhesive layer of a resin film, transfer by screen printing, or the like.

Further, the second excitation light absorbing layer 4 may also serve a function of absorbing photostimulated luminescence light. In this case, the second excitation light absorbing layer 4 is composed of, for example, ceramic, a urethane-acrylic-based resin or an epoxy-based resin, and contains a dye that absorbs the excitation light E and the photostimulated luminescence light L. The absorbance with respect to the wavelength range of the excitation light E of the second excitation light absorbing layer 4 is, for example, on the order of 60% to 99.9%, and the absorbance with respect to the wavelength range of the photostimulated luminescence light L of the second excitation light absorbing layer 4 is, for example, on the order of 60% to 99.9%. Examples of such a dye include carbon black, chromium oxide, nickel oxide, and iron oxide, and the second excitation light absorbing layer 4 is colored, for example, in black. Moreover, the second excitation light absorbing layer 4 that serves also as a photostimulated luminescence light absorbing layer can also be formed by the same method.

The radiation image converting panel 10 of the above second embodiment also provides the same effects as those of the radiation image converting panel 10 of the first embodiment described above. Also, the radiation image converting panel 10 of the second embodiment includes the second excitation light absorbing layer 4 provided so as to cover the back surface 1b of the support 1. Therefore, the excitation light E transmitted through the photostimulable phosphor layer 2 and the support 1 can be absorbed, which makes it possible to reduce scattering and diffused reflection of the excitation light E. As a result, a decline in resolution and contrast can be further suppressed.

### [Third Embodiment]

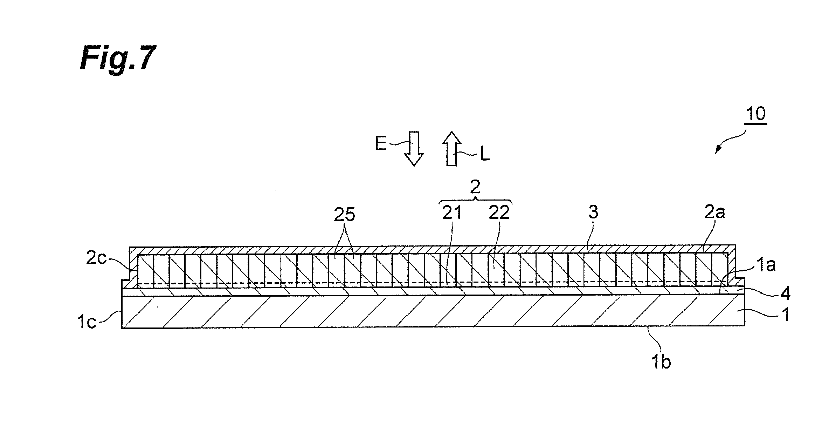

Fig. 7 is a schematic side sectional view showing a configuration of a radiation image converting panel according to a third embodiment. As shown in Fig. 7, the radiation image converting panel 10 of the third embodiment is different from the radiation image converting panel 10 of the first embodiment described above in the point of further including a second excitation light absorbing layer 4 that faces the first excitation light absorbing layer 3 with the photostimulable phosphor layer 2 interposed therebetween.

The second excitation light absorbing layer 4 is provided between the support 1 and the photostimulable phosphor layer 2 so as to cover the whole of the front surface 1a of the support 1, and is not provided on the back surface 1b and the side surfaces 1c of the support 1. In other words, the excitation light absorbing layers 3 and 4 are respectively provided on both surfaces of the photostimulable phosphor layer 2, so that the photostimulable phosphor layer 2 is sandwiched by the first excitation light absorbing layer 3 and the second excitation light absorbing layer 4. Also, the second excitation light absorbing layer 4 is provided between the front surface 1a of the support 1 and the helical structure portions 23 of the photostimulable phosphor layer 2. The thickness of the second excitation light absorbing layer 4 is, for example, 2µm or more, and is, for example, 50µm or less. The second excitation light absorbing layer 4 can be formed by coating and drying of a molten resin, bonding via an adhesive layer of a resin film, transfer by screen printing, or the like.

The second excitation light absorbing layer 4 is composed of, for example, ceramic, a urethane-acrylic-based resin, or an epoxy-based resin, and contains a dye that absorbs an excitation light E. The second excitation light absorbing layer 4 contains such a dye that, for example, the absorbance with respect to the wavelength range of the excitation light E becomes higher than the absorbance with respect to the wavelength range of the photostimulated luminescence light L. The absorbance with respect to the wavelength range of the excitation light E of the second excitation light absorbing layer 4 is, for example, on the order of 30% to 99.9%, and the absorbance with respect to the wavelength range of the photostimulated luminescence light L of the second excitation light absorbing layer 4 is, for example, on the order of 0.1% to 40%. Examples of such a dye that can be used include Zapon Fast Blue 3G (manufactured by Hoechst), Estrol Brill Blue N-3RL (manufactured by Sumitomo Chemical), D&C Blue No. 1 (manufactured by National Aniline), Spirit Blue (manufactured by Hodogaya Chemical), Oil Blue No. 603 (manufactured by Orient Chemical), Kiton Blue A (manufactured by Ciba-Geigy), Aizen Cathilon Blue GLH (manufactured by Hodogaya Chemical), Lake Blue AFH (manufactured by Kyowa Sangyo), Primocyanine 6GX (manufactured by Inabata & Co., Ltd.), Brillacid Green 6BH (manufactured by Hodogaya Chemical), Cyan Blue BNRCS (manufactured by TOYO INK), and Lionol Blue SL (manufactured by TOYO INK). Examples of the dye also include organic metal complex coloring materials such as Color Index No. 24411, No. 23160, No. 74180, No. 74200, No. 22800, No. 23154, No. 23155, No. 24401, No. 14830, No. 15050, No. 15760, No. 15707, No. 17941, No. 74220, No. 13425, No. 13361, No. 13420, No. 11836, No. 74140, No. 74380, No. 74350, and No. 74460. Examples of inorganic coloring materials include ultramarine, cobalt blue, cerulean blue, chromium oxide, and TiO₂-ZnO-Co-NiO-type pigments, and the second excitation light absorbing layer 4 is colored, for example, in blue.

The radiation image converting panel 10 of the above third embodiment also provides the same effects as those of the radiation image converting panel 10 of the first embodiment described above. Also, the radiation image converting panel 10 of the third embodiment includes the second excitation light absorbing layer 4 provided between the support 1 and the photostimulable phosphor layer 2. Therefore, the excitation light E transmitted through the photostimulable phosphor layer 2 can be absorbed, which makes it possible to further reduce scattering and diffused reflection of the excitation light E between the photostimulable phosphor layer 2 and the support 1. As a result, a decline in resolution and contrast can be further suppressed.

### [Fourth Embodiment]

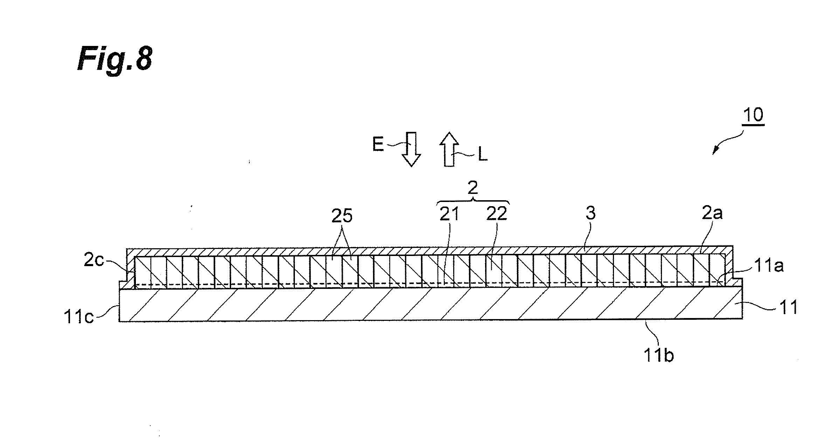

Fig. 8 is a schematic side sectional view showing a configuration of a radiation image converting panel according to a fourth embodiment. As shown in Fig. 8, the radiation image converting panel 10 of the fourth embodiment is different from the radiation image converting panel 10 of the first embodiment described above in the point of including a support 11 in place of the support 1.

The support 11 is a resin film, and shows, for example, a rectangular shape. The thickness of this support 11 is, for example, 50µm or more, and is, for example, 500µm or less. Also, the support 11 has excitation light absorbability to absorb the excitation light E at a predetermined absorbance, and functions as an excitation light absorbing layer for preventing diffusion and reflection of the excitation light E. The support 11 is composed of, for example, polyimide, PET, PEN, or the like, and contains a dye that absorbs the excitation light E. The support 11 contains such a dye that, for example, the absorbance with respect to the wavelength range of the excitation light E becomes higher than the absorbance with respect to the wavelength range of the photostimulated luminescence light L.

The absorbance with respect to the wavelength range of the excitation light E of the support 11 is, for example, on the order of 50% to 99.9%, and the absorbance with respect to the wavelength range of the photostimulated luminescence light L of the support 11 is, for example, on the order of 0.1% to 40%. Examples of such a dye that can be used include Zapon Fast Blue 3G (manufactured by Hoechst), Estrol Brill Blue N-3RL (manufactured by Sumitomo Chemical), D&C Blue No. 1 (manufactured by National Aniline), Spirit Blue (manufactured by Hodogaya Chemical), Oil Blue No. 603 (manufactured by Orient Chemical), Kiton Blue A (manufactured by Ciba-Geigy), Aizen Cathilon Blue GLH (manufactured by Hodogaya Chemical), Lake Blue AFH (manufactured by Kyowa Sangyo), Primocyanine 6GX (manufactured by Inabata & Co., Ltd.), Brillacid Green 6BH (manufactured by Hodogaya Chemical), Cyan Blue BNRCS (manufactured by TOYO INK), and Lionol Blue SL (manufactured by TOYO INK). Examples of the dye also include organic metal complex coloring materials such as Color Index No. 24411, No. 23160, No. 74180, No. 74200, No. 22800, No. 23154, No. 23155, No. 24401, No. 14830, No. 15050, No. 15760, No. 15707, No. 17941, No. 74220, No. 13425, No. 13361, No. 13420, No. 11836, No. 74140, No. 74380, No. 74350, and No. 74460. Examples of inorganic coloring materials include ultramarine, cobalt blue, cerulean blue, chromium oxide, and TiO₂-ZnO-Co-NiO-type pigments, and the support 1 is colored, for example, in blue.

Further, the support 11 may also serve a function of absorbing the photostimulated luminescence light L. In this case, the support 1 has a dye such as ceramic, carbon black, chromium oxide, nickel oxide, or iron oxide, and the absorbance with respect to the wavelength range of the excitation light E is for example, on the order of 50% to 99.9% and the absorbance with respect to the wavelength range of the photostimulated luminescence light L is, for example, on the order of 50% to 99.9%. Moreover, the support 11 is colored, for example, in black.

The radiation image converting panel 10 of the above fourth embodiment also provides the same effects as those of the radiation image converting panel 10 of the first embodiment described above. Also, the radiation image converting panel 10 of the fourth embodiment includes the support 11 that absorbs the excitation light E or both of the excitation light E and the photostimulated luminescence light L at a predetermined absorbance. Therefore, the excitation light E or both of the excitation light E and the photostimulated luminescence light L transmitted through the photostimulable phosphor layer 2 can be absorbed, which makes it possible to reduce scattering and diffused reflection of the excitation light E or both of the excitation light E and the photostimulated luminescence light L. As a result, a decline in resolution and contrast can be further suppressed.

### [Fifth Embodiment]

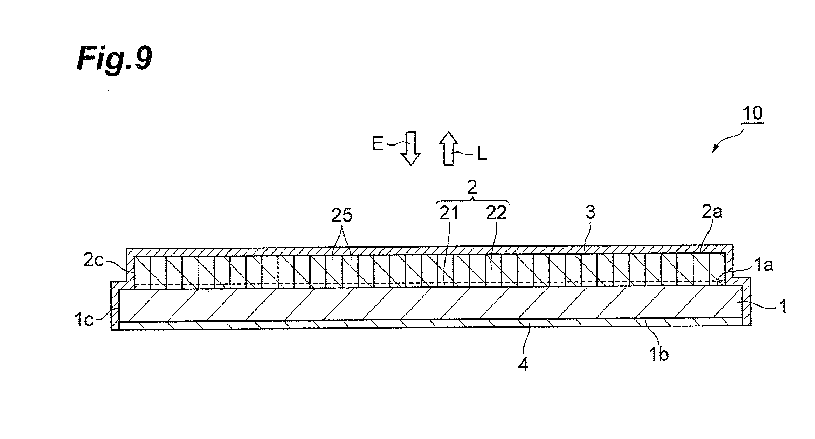

Fig. 9 is a schematic side sectional view showing a configuration of a radiation image converting panel according to a fifth embodiment. As shown in Fig. 9, the radiation image converting panel 10 of the fifth embodiment is different from the radiation image converting panel 10 of the first embodiment described above in the range in which the first excitation light absorbing layer 3 is provided and in the point of further including a second excitation light absorbing layer 4 that faces the first excitation light absorbing layer 3 with the photiostimulable phosphor layer 2 interposed therebetween.

The first excitation light absorbing layer 3 is provided so as to cover the whole of the upper surface 2a and the side surfaces 2c of the photostimulable phosphor layer 2 as well as the side surfaces 1c of the support 1. The second excitation light absorbing layer 4 is provided so as to cover the whole of the back surface 1b of the support 1. In other words, in the radiation image converting panel 10 of the fifth embodiment, the support 1 and the photostimulable phosphor layer 2 are completely covered with the first excitation light absorbing layer 3 and the second excitation light absorbing layer 4.

Also, the first excitation light absorbing layer 3 is in contact with the front surface 1a and the side surfaces 1c of the support 1 and the upper surface 2a and the side surfaces 2c of the photostimulable phosphor layer 2. Also, the second excitation light absorbing layer 4 is in contact with the back surface 1b of the support 1. That is, the first excitation light absorbing layer 3 is formed by coating, and provided on the front surface 1a and the side surfaces 1c of the support 1 as well as the upper surface 2a and the side surfaces 2c of the photostimulable phosphor layer 2. The second excitation light absorbing layer 4 is formed by coating and drying of a molten resin, bonding via an adhesive layer of a resin film, transfer by screen printing, or the like, and is provided on the back surface 1b of the support 1. This second excitation light absorbing layer 4 is composed in the same manner as the second excitation light absorbing layer 4 of the second embodiment.

The radiation image converting panel 10 of the above fifth embodiment also provides the same effects as those of the radiation image converting panel 10 of the first embodiment described above. Also, the radiation image converting panel 10 of the fifth embodiment includes the second excitation light absorbing layer 4 provided so as to cover the back surface 1b of the support 1. Therefore, the excitation light E or both of the excitation light E and the photostimulated luminescence light L transmitted through the photostimulable phosphor layer 2 and the support 1 can be absorbed, which makes it possible to further reduce scattering and diffused reflection of the excitation light E or both of the excitation light E and the photostimulated luminescence light L. As a result, a decline in resolution and contrast can be further suppressed. Further, because the first excitation light absorbing layer 3 is provided so as to cover the side surfaces 1c of the support 1, scattering and diffused reflection of the excitation light E on the side surfaces 1c can be reduced, so that a decline in resolution and contrast can be further suppressed.

In addition, a radiation image converting panel according to an aspect of the present invention is not limited to those described in the above embodiments. For example, the support 1 may be a stainless steel foil, glass, Al, CFRP, or the like.

Also, the radiation image converting panels 10 may further include a moisture-resistant protective film between the photostimulable phosphor layer 2 and the first excitation light absorbing layer 3 or on the first excitation light absorbing layer 3. The moisture-resistant protective film is a moisture-proofing film for suppressing the photostimulable phosphor layer 2 from absorbing moisture in the air. This moisture-proofing film is composed of, for example, an organic film of polyparaxylylene, polyurea, or the like or a combination of the organic film described above and an inorganic film such as a nitride film (for example, SiN, SiON) or a carbide film (for example, SiC). In this case, the photostimulable phosphor layer 2 can be suppressed from absorbing moisture in the air, so that the photostimulable phosphor layer 2 can be suppressed from deliquescing.

Also, the radiation image converting panels 10 may include, in place of the first excitation light absorbing layer 3, a moisture-resistant protective film provided so as to cover the upper surface 2a and the side surfaces 2c of the photostimulable phosphor layer 2 and fill the gaps of the plurality of columnar crystals 25 of the photostimulable phosphor layer 2 and a scratch-resistant protective film provided on the moisture-resistant protective film. In this case, at least one of the moisture-resistant protective film and scratch-resistant protective film may be made to function as an excitation light absorbing layer by coloring.

Also, the second excitation light absorbing layer 4 may be provided both on the back surface 1b of the support 1 and between the support 1 and the photostimulable phosphor layer 2.

### Industrial Applicability

According to an aspect of the present invention, a decline in resolution can be suppressed, while the luminance can be improved.

### Reference Signs List

1, 11... support, 1a... front surface, 1b... back surface, 2... photostimulable phosphor layer, 3... first excitation light absorbing layer, 4... second excitation light absorbing layer, 10... radiation image converting panel, 23... helical structure portion, 24... columnar portion, 25... columnar crystal, E... excitation light, L... photostimulated luminescence light.

## Claims

1. A radiation image converting panel comprising:
a support;
a photostimulable phosphor layer provided on a front surface of the support, made of a plurality of columnar crystals; and
a first excitation light absorbing layer provided on the photostimulable phosphor layer, wherein
each of the plurality of columnar crystals has a helical structure portion formed by stacking in a helical shape at a side close to the support and a columnar portion formed by extending from the helical structure portion toward the first excitation light absorbing layer, and
the photostimulable phosphor layer accumulates incident radiation, and as a result of being irradiated with excitation light via the first excitation light absorbing layer, outputs light according to the accumulated radiation via the first excitation light absorbing layer.

2. The radiation image converting panel according to claim 1, further comprising a second excitation light absorbing layer facing the first excitation light absorbing layer with the photostimulable phosphor layer interposed therebetween.

3. The radiation image converting panel according to claim 2, wherein the second excitation light absorbing layer is provided between the support and the photostimulable phosphor layer.

4. The radiation image converting panel according to claim 2, wherein the second excitation light absorbing layer is provided on a back surface of the support that is on a side opposite to the front surface of the support.

5. The radiation image converting panel according to any one of claim 2 to claim 4, wherein the second excitation light absorbing layer absorbs light of photostimulated luminescence produced in the photostimulable phosphor layer.

6. A radiation image converting panel comprising:
a support having excitation light absorbability;
a photostimulable phosphor layer provided on a front surface of the support, made of a plurality of columnar crystals; and
a first excitation light absorbing layer provided on the photostimulable phosphor layer, wherein
each of the plurality of columnar crystals has a helical structure portion formed by stacking in a helical shape at a side close to the support and a columnar portion formed by extending from the helical structure portion toward the first excitation light absorbing layer, and
the photostimulable phosphor layer accumulates incident radiation, and as a result of being irradiated with excitation light via the first excitation light absorbing layer, outputs light according to the accumulated radiation via the first excitation light absorbing layer.

7. The radiation image converting panel according to claim 6, wherein the support absorbs light of photostimulated luminescence produced in the photostimulable phosphor layer.

8. The radiation image converting panel according to any one of claim 1 to claim 7, wherein the first excitation light absorbing layer is a moisture-resistant protective film that protects the photostimulable phosphor layer.

9. The radiation image converting panel according to any one of claim 1 to claim 8, wherein the photostimulable phosphor layer is composed of a photostimulable phosphor including Eu-doped CsBr.

10. The radiation image converting panel according to any one of claim 1 to claim 9, wherein the first excitation light absorbing layer is provided so as to cover a front surface and a side surface of the photostimulable phosphor layer.

11. The radiation image converting panel according to claim 10, wherein the first excitation light absorbing layer is provided so as to cover a side surface of the support.
